# EUROPÄISCHE PATENTANMELDUNG

(11) **EP 4 464 493 A1**
(43) Veröffentlichungstag der Anmeldung: **20.11.2024**
(21) Anmeldenummer: 24175521.4
(22) Anmeldetag: 13.05.2024
(51) Int. Cl.: B29C 45/27

(54) **DÜSENRIEGEL UND DÜSENANORDNUNG FÜR EIN HEISSKANALSYSTEM**

(30) Priorität: 16.05.2023 DE 102023112955
(71) Anmelder: Günther Heisskanaltechnik GmbH, 35066 Frankenberg (DE)
(72) Erfinder: Sommer, Siegrid, 35099 Burgwald (DE); Schnell, Torsten, 35104 Lichtenfels (DE); Sommer, Stefan, 35099 Burgwald (DE)
(74) Vertreter: Patentanwälte Olbricht Buchhold Keulertz

(57) **Zusammenfassung**

Die vorgestellte Erfindung betrifft einen Düsenriegel (100) für ein Heißkanalsystem zum Verarbeiten einer fließfähigen Masse. Der Düsenriegel umfasst eine Vielzahl materialführender Rohre (101) zum Leiten der fließfähigen Masse durch den Düsenriegel (100), einen Kopfbereich (103), in dem Verteilerkanäle zum Verteilen der fließfähigen Masse auf jeweilige Rohre (101) der Vielzahl Rohre (101) ausgebildet sind, wobei in dem Düsenriegel (100) eine Anzahl Temperierungskanäle (105) zum Aufnehmen eines Temperierungselements zum Temperieren des Düsenriegels (100) ausgebildet ist, wobei ein Verlauf der Anzahl Temperierungskanäle (105) sich zwischen jeweiligen Rohren (101) der Vielzahl Rohre (101) unterscheidet.

## Beschreibung

Die Erfindung betrifft einen Düsenriegel, eine Düsenanordnung für ein Heißkanalsystem mit einem solchen Düsenriegel sowie ein Spritzgussverfahren, insbesondere zum Herstellen von Mikrotiterplatten oder Kavitätenplatten (englisch: well plates oder microwell plates), gemäß den beigefügten Ansprüchen.

Heißkanal- oder Kaltkanalsysteme sind allgemein bekannt. Sie werden in Spritzgießwerkzeugen eingesetzt, um eine fließfähige Masse bei einer vorgebbaren Temperatur unter Druck einem trennbaren Werkzeugblock mit darin ausgebildeten Formnestern (Kavitäten) zuzuführen. Die fließfähige Masse wird über Verteilerkanäle einem oder mehreren materialführenden Rohren (Materialrohre) zugeführt, die jeweils endseitig über eine Düsenspitze, einem Düsenmundstück oder - bei Nadelverschlussdüsen - über eine Nadelführung in ein jeweils zugeordnetes Formnest münden.

Die Verteilerkanäle sind in einer oder in mehreren Verteilerplatten ausgebildet, an welchen die materialführenden Rohre angeschlossen sind. Letztere können gruppenweise zusammengefasst sein und einen Düsenriegel bilden, vorzugsweise in einem Mehrfachwerkzeug mit einer Vielzahl an Formnestern.

Damit die fließfähige Masse innerhalb der Düsen nicht vorzeitig abkühlt, ist meist eine Heizung vorgesehen, welche die materialführenden Rohre und damit das in den darin ausgebildeten Strömungskanälen geführte Material auf einer gewünschten Temperatur hält. Werden hingegen beispielsweise reaktive Polymere verarbeitet, ist es erforderlich, die Düse zu kühlen, damit die zu verarbeitende Masse beim Eintritt in die Formnester eine bestimmte Temperatur nicht übersteigt. Zur Erfassung der Temperatur verwendet man gewöhnlich einen oder mehrere Temperaturfühler.

Für die Herstellung von Produkten, die eine relativ große Anzahl an Anspritzpunkten benötigen oder aufweisen, werden mehrere Düsenriegel verwendet, die parallel nebeneinander angeordnet eine Düsenanordnung bilden, so dass die materialführenden Rohre mit geringem Abstand untereinander in einer Matrix oder in einem Raster liegen, wobei vorzugsweise jedes Materialrohr eine Kavität bedient (siehe beispielsweise EP 1 254 004 A1).

Aufgrund einer Verteilung von thermischer Energie zwischen jeweiligen materialführenden Rohren kann es zu Situationen kommen, in denen durch Rohre im Zentrum der Düsenanordnung geleitete fließfähige Masse wärmer ist als durch Randrohre am Rand der Düsenanordnung geleitete fließfähige Masse. Durch derart heterogene Wärmeverteilung können im Produkt Unregelmäßigkeiten oder Schäden entstehen, insbesondere bei größeren Produkten wie z.B. Mikrotiterplatten mit 48, 96 oder mehr Kavitäten (englisch: wells).

Ferner können materialführende Rohre im Zentrum einer Düsenanordnung stärker thermisch belastet sein als Rohre am Rand der Düsenanordnung, so dass die Rohre im Zentrum stärkerem thermischem Verzug ausgesetzt sind als die Rohre am Rand der Düsenanordnung. Dadurch kann sich eine geometrische Ausrichtung der verschiedenen Rohre untereinander unterscheiden, was ebenfalls zu Problemen führen kann.

Vor diesem Hintergrund ist es eine Aufgabe der vorgestellten Erfindung, eine Möglichkeit zum gleichmäßigen Spritzgießen von größeren Produkten bzw. Formteilen bereitzustellen, insbesondere für die Herstellung von Mikrotiterplatten mit 48, 96 oder mehr Kavitäten, wie sie z.B. für mikrobiologische Arbeitsgänge im Laborbetrieb typisch sind.

Gemäß einem ersten Aspekt der vorgestellten Erfindung wird ein Düsenriegel für ein Heißkanalsystem zum Verarbeiten einer fließfähigen Masse vorgestellt.

Dabei sieht die Erfindung vor, dass ein Düsenriegel für ein Heißkanalsystem zum Verarbeiten einer fließfähigen Masse eine Vielzahl materialführender Rohre zum Leiten der fließfähigen Masse durch den Düsenriegel umfasst. Der Düsenriegel hat ferner einen Kopfbereich, in dem Verteilerkanäle zum Verteilen der fließfähigen Masse auf jeweilige Rohre der Vielzahl Rohre ausgebildet sind, wobei in dem Düsenriegel eine Anzahl Temperierungskanäle zum Aufnehmen eines Temperierungselements zum Temperieren des Düsenriegels ausgebildet ist, und wobei ein Verlauf der Anzahl Temperierungskanäle sich zwischen jeweiligen Rohren der Vielzahl Rohre unterscheidet.

Unter einem materialführenden Rohr bzw. einem Rohr ist im Kontext der vorgestellten Erfindung eine Materialanordnung zu verstehen, in der eine Ausnehmung bzw. ein Strömungskanal für die fließfähige Masse ausgebildet ist, so dass diese durch das Rohr fließen und ggf. über eine Düsenspitze oder ein Düsenmundstück dem Formnest zugeführt werden kann. Der vorgestellte Düsenriegel kann als monolithischer Block ausgebildet sein, wobei der Kopfbereich und die materialführenden Rohre einteilig ausgebildet sind. Der Düsenriegel kann aber auch mehrteilig ausgebildet sein, wobei die materialführenden Rohre in den Kopfbereich eingesetzt und darin fixiert sind, z.B. durch Verschrauben oder Verpressen.

Vorzugsweise sind die materialführenden Rohre des Düsenriegels als Materialvorsprünge aus einem Grundkörper ausgestaltet, so dass die Rohre über den Grundkörper hervorstehen, der beispielsweise den Kopfbereich des vorgestellten Düsenriegels umfassen bzw. bilden kann. Entsprechend kann der Düsenriegel ein Raster oder eine Matrix an Rohren ausbilden, die zumindest bereichsweise voneinander beabstandet sind.

Unter einem Temperierungskanal ist im Kontext der vorgestellten Erfindung eine Ausnehmung oder ein Bereich zum Aufnehmen eines Temperierungselements, wie z.B. einem Heizdraht oder einer Kühlmittelleitung zum Temperieren, d.h. zum Heizen oder zum Kühlen des Düsenriegels bzw. der materialführenden Rohre, zu verstehen.

Ein Temperierungskanal kann eine Nut sein, die zumindest abschnittsweise in den Düsenriegel eingebracht ist. Der Temperierungskanal kann hierbei mechanisch in den Düsenriegel eingearbeitet sein oder er wird konstruktiv in einem Plan zum 3D-Druck ausgebildet. Ein Temperierungskanal kann auch nach außen geschlossen ausgebildet sein und ein Temperiermedium führen.

Die vorgestellte Erfindung basiert auf dem Prinzip, dass mindestens ein Temperierungskanal in dem Düsenriegel vorgesehen ist, dessen Verlauf sich zwischen jeweiligen Rohren der Vielzahl der materialführenden Rohre unterscheidet. Das Merkmal des Unterscheidens bezieht sich vorzugsweise auf unterschiedliche oder variierende Längen, unterschiedliche oder variierende Winkel relativ zueinander, unterschiedliche oder variierende Abstände untereinander oder relativ zu den Randbereichen der materialführenden Rohre oder Kombinationen davon.

Entsprechend bedingt der Verlauf eines jeweiligen Temperierungskanals eine unterschiedliche Übertragung von thermischer Energie auf unterschiedliche Rohre oder Bereiche des Düsenriegels. Dies bedeutet, dass ein jeweiliger Temperierungskanal einen spezifischen Eintrag von thermischer Energie in einem jeweiligen Rohr bedingt, so dass beispielsweise ein definierter Temperaturverlauf in dem Düsenriegel homogenisiert wird und ein besonders gleichmäßiger Fluss von fließfähiger Masse durch die Rohre sowie ein besonders gleichmäßiger Wärmeverzug des Düsenriegels erreicht wird.

Durch die Anzahl Temperierungskanäle des vorgestellten Düsenriegels werden besonders heiße Stellen bzw. sogenannte "hot spots", die zu schadhaften Stellen in einem Produkt und/oder dem Düsenriegel führen können, minimiert. Entsprechend eignet sich der vorgestellte Düsenriegel besonders vorteilhaft zum Spritzgießen eines Produkts mit zahlreichen parallelen bzw. gleichen Formen, wie beispielsweise einer Wellplatte oder Mikrotiterplatte, insbesondere mit 96 Kavitäten.

Es kann vorgesehen sein, dass ein Verlauf von in gegenüberliegenden Seiten des Düsenriegels angeordneten Randrohren ausgebildeten Randtemperierungskanälen sich von einem Verlauf von in zwischen den Randrohren ausgebildeten Mitteltemperierungskanälen unterscheidet.

Durch einen unterschiedlichen Verlauf eines Temperierungskanals am Rand und im Zentrum bzw. zwischen jeweiligen Rändern oder, alternativ, unterschiedlichen Temperierungskanälen am Rand und im Zentrum bzw. zwischen jeweiligen Rändern des Düsenriegels, wird bei gleicher Wärmeverteilung pro Volumen Temperierungskanal ein unterschiedlicher Wärmeeintrag zwischen den Rändern und dem Zentrum bzw. einem Bereich zwischen den Rändern erreicht.

Es kann weiterhin vorgesehen sein, dass die Randtemperierungskanäle länger sind als die Mitteltemperierungskanäle.

Alternativ können bspw. Temperierungskanäle bzw. Bereiche eines Temperierungskanals im Zentrum bzw. zwischen den Rändern länger oder kürzer ausgestaltet sein als Temperierungskanäle bzw. Bereiche eines Temperierungskanals am Rand des Düsenriegels.

Es kann weiterhin vorgesehen sein, dass ein jeweiliger in einem Rohr ausgebildeter bzw. verlaufender Temperierungskanal einen aufsteigenden Ast und einen absteigenden Ast umfasst, und jeweilige Mitteltemperierungskanäle und/oder Randtemperierungskanäle derart ausgestaltet sind, dass deren jeweiliger aufsteigender Ast und/oder deren absteigender Ast zueinander geneigt verlaufen.

Zueinander geneigt verlaufende Äste eines Temperierungskanals bedingen erste Bereiche, in denen die Äste weiter beabstandet sind als in zweiten Bereichen, in denen die Äste näher zueinander verlaufen, so dass der Grundkörper des Düsenriegels in dem ersten Bereich besonders wenig mechanisch geschwächt wird und entsprechend stabil ist. Ferner wird in dem ersten Bereich Platz geschaffen für bspw. eine Weiterführung des Temperierungskanals auf eine weitere Seite, ohne dass es zu einer Erhöhung eines Eintrags von thermischer Energie in den ersten Bereich durch die Weiterführung kommt.

In einer weiteren Ausführungsform der Erfindung ist vorgesehen, dass sich die Temperierungskanäle auf oder in einem materialführenden Rohr über mehrere Seitenflächen des jeweiligen Rohres erstrecken. Dies gilt insbesondere für Randrohre, die am Ende eines jeden Düsenriegels ausgebildet sind. Dadurch sind die Temperierungskanäle nicht nur auf einer Längsseite des Düsenriegels ausgebildet, sondern auch auf den Querseiten.

Es kann weiterhin vorgesehen sein, dass jeweilige Randrohre eine Schnittstelle zur thermischen Kopplung mit einem weiteren Düsenriegel umfassen.

Schnittstellen zur thermischen Kopplung mit einem weiteren Düsenriegel ermöglichen eine Parallelisierung mehrerer Düsenriegel zu einer Düsenanordnung mit besonders vielen Rohren, insbesondere 48, 96 oder mehr Rohre für die Ausbildung von 48, 96 oder mehr einzelnen Anspritzpunkten.

Es kann weiterhin vorgesehen sein, dass an jeweiligen Randrohren mehrere Temperierungskanäle und an jeweiligen Mittelrohren lediglich ein Temperierungskanal ausgebildet ist.

Da Randrohre in der Regel mehrere freiliegende Oberflächen ausbilden, kann an jeder freiliegenden Oberfläche ein Temperierungskanal ausgebildet werden, um einen Verlust an thermischer Energie durch die freiliegenden Oberflächen zu kompensieren.

In dem Temperierungskanal bzw. in der Nut ist ein Heizelement montiert oder eingebracht. Dieses kann als elektrischer Widerstandsdraht oder als Dickschichtheizer ausgebildet sein. Das Heizelement kann auch ein Rohr (Heizrohr) sein, in dem ein thermisches Fluid geführt wird.

Ein elektrisches Heizelement eignet sich besonders vorteilhaft zum Heizen des Düsenriegels. Ein thermisches Fluid eignet sich zum Heizen oder Kühlen des Düsenriegels.

Es kann weiterhin vorgesehen sein, dass zumindest ein Teil der Temperierungskanäle sich in den Kopfbereich des Düsenriegels erstreckt. und jeweilige Randtemperierungskanäle sich nicht in den Kopfbereich des Düsenriegels hinein erstrecken.

Durch ein Erstrecken eines Temperierungskanals in den Kopfbereich kann ein optimales Temperaturprofil in dem Düsenriegel eingestellt werden, da ein Abfluss von thermischer Energie aus den Rohren in den Kopfbereich kompensiert werden kann.

Es kann weiterhin vorgesehen sein, dass lediglich jeweilige um einen zentralen Mitteltemperierungskanal des Düsenriegels herum angeordnete Mitteltemperierungskanäle sich in den Kopfbereich des Düsenriegels erstrecken. Alternativ ist es möglich, dass sich Randtemperierungskanäle bis in den Düsenkopf hinein erstrecken, namentlich auf dessen Seiten- oder Stirnflächen.

Da im Bereich des zentralen Mitteltemperierungskanals der Kopfbereich besonders viel Material umfasst, hat sich eine Erstreckung von um den zentralen Mitteltemperierungskanal des Düsenriegels herum angeordneten Mitteltemperierungskanälen in den Kopfbereich als besonders geeignet zur Kompensation eines Abflusses von thermischer Energie in den Kopfbereich erwiesen.

Es kann weiterhin vorgesehen sein, dass ein Abstand zwischen durch jeweilige Rohre vorgegebenen Anspritzpunkten 9 Millimeter beträgt.

Ein Abstand von 9 Millimetern zwischen jeweiligen Anspritzpunkten bzw. Austrittspunkten von fließfähiger Masse aus dem Düsenriegel, ermöglicht ein Spritzgießen einer für den medizinischen Gebrauch gemäß gängigem Laborstandard geeigneten Wellplattenstreifen, die aneinandergereiht zu einer Wellplatte bspw. durch bekannte Laborroboter verwendet werden können.

Es kann weiterhin vorgesehen sein, dass der Abstand in 2 Raumrichtungen zwischen durch jeweilige Rohre vorgegebenen Anspritzpunkten 9 Millimeter beträgt.

Ein Abstand von 9 Millimetern in 2 Raumrichtungen zwischen jeweiligen Anspritzpunkten ermöglicht ein Spritzgießen einer für den medizinischen Gebrauch gemäß gängigem Laborstandard geeigneten Wellplatte, insbesondere einer 96-fach Wellplatte, die bspw. durch bekannte Laborroboter verwendet werden kann.

Es kann weiterhin vorgesehen sein, dass die Rohre unter dem Kopfbereich eine Matrix bilden.

Eine Matrix bzw. ein Raster mit gleichmäßigen Abständen zwischen jeweiligen Rohren ermöglicht ein Spritzgießen einer Wellplatte, insbesondere einer 96-fach Wellplatte in einem sogenannten "one-shot" Verfahren.

Eine weitere wichtige Ausgestaltung der Erfindung sieht vor, dass der Düsenriegel mehrere materialführende Rohre umfasst, die durch Ausnehmungen voneinander beabstandet sind, wobei es von Vorteil ist, wenn die Ausnehmungen in Längs- und/oder in Querrichtung zwischen den materialführenden Rohren verlaufen.

Wichtig ist ferner, dass in zumindest einem Teil der zwischen den Rohren verlaufenden Ausnehmungen ein weiteres Temperierungselement angeordnet ist, wobei das weitere Temperierungselement vorzugsweise eine Dickschichtheizung umfasst oder aufweist.

Konstruktiv ist es günstig, wenn das weitere Temperierungselement streifen- oder plattenförmig ausgestaltet ist. Dadurch lässt sich das weitere Temperierungselement in den Ausnehmungen zwischen den materialführenden Rohren anordnen. Dies ermöglicht eine zusätzliche gezielte Temperierung des Düsenriegels, insbesondere ein zusätzliches Beheizen der Rohre, um den Temperaturverlauf in dem Düsenriegel, insbesondere in den materialführenden Rohren zu beeinflussen und weiter zu vergleichmäßigen.

Die weiteren Temperierungselemente können gemeinsam mit den Temperierungselementen in den Temperierungskanälen betrieben werden, beispielsweise über ein gemeinsames Steuergerät. Die weiteren Temperierungselemente können aber auch unabhängig von den Temperierungselementen in den Temperierungskanälen angesteuert werden. Entweder über ein gemeinsames oder ein separates Steuergerät.

Es kann weiterhin vorgesehen sein, dass die Matrix der materialführenden Rohre innerhalb eines Düsenriegels acht paarige Rohre umfasst.

Acht paarige Rohre, d.h. 16 Rohre pro Düsenriegel ermöglichen ein Zusammenfügen von 6 Düsenriegeln zu einer Düsenanordnung, um eine Mikrotiterplatte mit 96 Kavitäten (96 well plate) herzustellen.

Es kann weiterhin vorgesehen sein, dass der Düsenriegel ein monolithischer Block ist.

Der vorgestellte Düsenriegel kann aus einem einzigen Stück Metall (aus dem Vollen) mittels Fräsen, Erodieren oder Laserschneiden hergestellt werden oder mittels additiver Fertigung, generativer Fertigung oder Rapid-Technologien (3D-Druck).

Es kann weiterhin vorgesehen sein, dass an einem ersten Ende eines jeweiligen Rohrs ein Düsenmundstück, eine Düsenspitze und/oder eine Nadelführung angeordnet ist, deren Querschnitt kleiner ist als ein Querschnitt des ersten Endes des jeweiligen Rohrs bzw. Düsenschafts.

Es kann weiterhin vorgesehen sein, dass der Düsenriegel eine Anzahl Düsennadeln zum Steuern eines Volumenstroms der fließfähigen Masse durch den Düsenriegel umfasst.

Düsennadeln ermöglich ein präzises Steuern eines Stroms von fließfähiger Masse durch jeweilige Rohre des Düsenriegels. Düsennadeln ermöglich ein präzises Steuern eines Stroms von fließfähiger Masse durch jeweilige Rohre des Düsenriegels.

Es kann weiterhin vorgesehen sein, dass der Düsenriegel eine Anzahl Düsennadeln zum Steuern eines Volumenstroms der fließfähigen Masse durch den Düsenriegel umfasst.

Düsennadeln ermöglich ein präzises Steuern eines Stroms von fließfähiger Masse durch jeweilige Rohre des Düsenriegels.

Gemäß einem zweiten Aspekt betrifft die vorgestellte Erfindung eine Düsenanordnung für ein Heißkanalsystem zum Verarbeiten einer fließfähigen Masse, wobei die Düsenanordnung eine Vielzahl der vorgestellten Düsenriegel umfasst.

Es kann vorgesehen sein, dass die Düsenanordnung 6 Düsenriegel umfasst, die jeweils 8 Rohrpaare umfassen.

8 paarige Rohre, d.h. 16 Rohre pro Düsenriegel ermöglichen bei einem Zusammenschluss von 6 Düsenriegeln das Spritzgießen einer 96-Wellplatte in einem "one-shot" Verfahren.

Es kann weiterhin vorgesehen sein, dass zwischen jeweiligen Düsenriegeln Zwischenelemente angeordnet sind, die dazu konfiguriert sind, thermische Energie in angrenzende Düsenriegel einzuleiten oder thermische Energie aus angrenzenden Düsenriegeln abzuführen.

Zwischenelemente, wie bspw. flächige Elemente aus Metall oder einem thermischen Isolator, ermöglichen die Kontrolle eines thermischen Flusses zwischen jeweiligen Düsenriegeln, so dass ein besonders gleichmäßiger thermischer Fluss durch die Düsenanordnung eingestellt werden kann. Dazu können die Zwischenelemente bspw. zwischen jeweilige Düsenriegel geklemmt und/oder mit jeweiligen Düsenriegeln verbunden insbesondere stoffschlüssig verbunden, bspw. verklebt oder verschweißt werden.

Gemäß einem dritten Aspekt betrifft die vorgestellte Erfindung ein Spritzgussverfahren zum Herstellen eines Produkts, wobei das Spritzgussverfahren das Spritzgießen des Produkts mittels einer möglichen Ausgestaltung der vorgestellten Düsenanordnung umfasst und wobei das Produkt in einem one-shot Verfahren gegossen wird.

Das mittels des vorgestellten Herstellungsverfahrens hergestellte Produkt kann insbesondere ein großes bzw. großflächiges Produkt sein.

Es kann vorgesehen sein, dass das Produkt eine Wellplatte, insbesondere eine 96-fach Wellplatte ist.

Eine Wellplatte kann bspw. ein Streifen bzw. eine Einheit sein, von denen eine Vielzahl zu einer größeren Wellplatte, wie bspw. einer 96-fach Wellplatte zusammengefügt werden können.

Alternativ zu einem Streifen bzw. einer Einheit, kann eine große Wellplatte, wie bspw. eine 96-Wellplatte, komplett in einem Stück hergestellt werden.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine mögliche Ausgestaltung des vorgestellten Düsenriegels,
- Fig. 2: der Düsenriegel gemäß Fig. 1 in einer perspektivischen Ansicht, und
- Fig. 3: eine mögliche Ausgestaltung der vorgestellten Düsenanordnung.

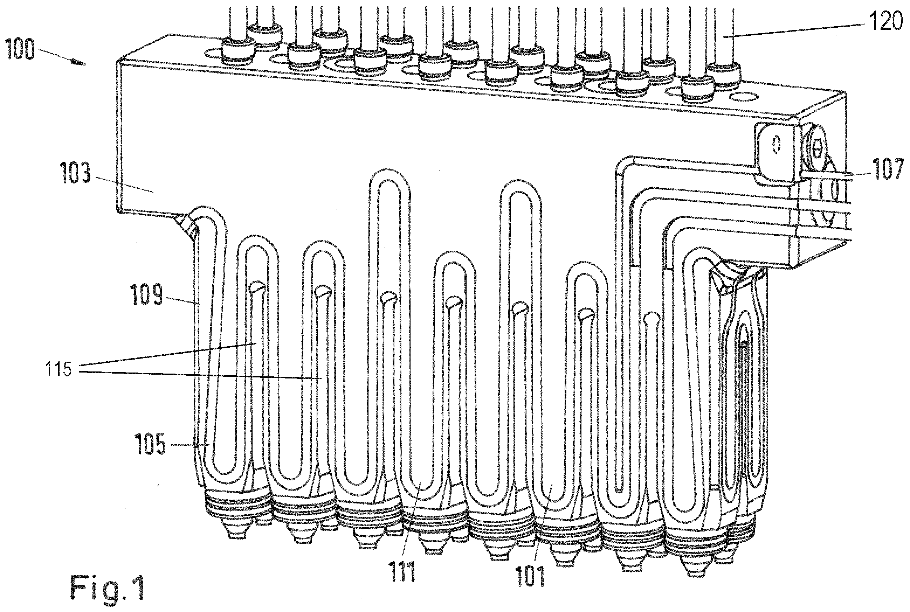

In Fig. 1 ist ein Düsenriegel 100 für ein Heißkanalsystem zum Verarbeiten einer fließfähigen Masse dargestellt.

Der Düsenriegel 100 umfasst eine Vielzahl materialführender Rohre 101 zum Leiten der fließfähigen Masse durch den Düsenriegel 100, wobei die Rohre 101 in einer Matrix oder einem Raster parallel nebeneinander und mit Abstand angeordnet sind. In einem Kopfbereich 103 sind die Rohre 101 miteinander verbunden, wobei in dem Kopfbereich 103 mehrere (nicht dargestellte) Verteilerkanäle ausgebildet sind zum Verteilen der fließfähigen Masse auf die jeweiligen Rohre 101 der Vielzahl Rohre 101.

In dem Düsenriegel 100 ist ein Temperierungskanal 105 zum Aufnehmen eines Temperierungselements zum Temperieren des Düsenriegels 100, wie bspw. einem Heizdraht, ausgebildet.

Ferner umfasst der Düsenriegel 100 einen optionalen Messfühler 107 zum Messen einer Temperatur des Düsenriegels 100.

In Fig. 1 ist erkennbar, dass sich ein Verlauf des Temperierungskanals 105 zwischen jeweiligen Rohren 101 der Vielzahl Rohre 101 unterscheidet, indem der Temperierungskanal 105 an jeweiligen Randrohren 109 weniger hoch ist als im Bereich von Mittelrohren 111. Dies bedeutet, dass die Temperierungskanäle 105 der einzelnen materialführenden Rohre 101 unterschiedlich weit in den Kopfbereich 103 des Düsenriegels 100 hineinragen, so dass die Längen einzelner Abschnitte der Temperierungskanäle 105 auf oder in den materialführenden Rohren 101 unterschiedlich ausgebildet sind. Dies wiederum führt dazu, dass zumindest ein Teil der Mitteltemperierungskanäle 111 sich - wie in Fig. 1 gezeigt - in den Kopfbereich 103 des Düsenriegels 100 erstreckt und jeweilige Randtemperierungskanäle 109 sich nicht in den Kopfbereich 103 des Düsenriegels 100 erstrecken.

Die Temperierungskanäle 105 auf oder in den materialführenden Rohren 101 können abschnittsweise auch unterschiedlich breit ausgebildet sein.

Der Verlauf der Temperierungskanäle 105 kann ergänzend oder alternativ auf den gegenüberliegenden Seiten des Düsenriegels (100) unterschiedlich ausgebildet sein, indem die Temperierungskanäle 105 zumindest abschnittsweise unterschiedliche Länden oder Breiten aufweisen, so dass sich auch dadurch der Verlauf von Randtemperierungskanäle auf oder in Randohren 109 von einem Verlauf von in zwischen den Randrohren (109) ausgebildeten Mitteltemperierungskanälen (111) unterscheidet.

Ferner kann vorgesehen sein, dass ein jeweiliger in einem materialführenden Rohr 101 ausgebildeter Temperierungskanal 105 einen aufsteigenden Ast und einen absteigenden Ast umfasst, wobei jeweilige Mitteltemperierungskanäle 111 und/oder Randtemperierungskanäle 109 derart ausgestaltet sind, dass die Kanäle zueinander geneigt verlaufen, beispielsweise ein jeweiliger aufsteigender Ast und/oder ein absteigender Ast.

Weiter sieht eine mögliche Unterscheidung der Verläufe der Anzahl der Temperierungskanäle 105 vor, dass an jeweiligen Randrohren 109 mehrere Temperierungskanäle 105 und an jeweiligen Mittelrohren 111 lediglich ein Temperierungskanal 105 ausgebildet ist.

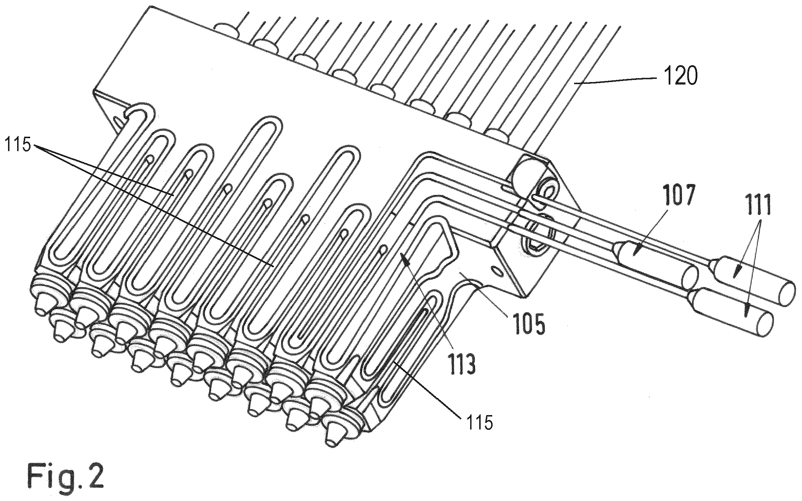

In Fig. 2 ist der Düsenriegel 100 in einer perspektivischen Ansicht dargestellt. Hier ist erkennbar, dass der Temperierungskanal 105 sich auch in einen Bereich 105 auf einer kurzen (Quer)Seite des Düsenriegels 100 erstreckt, d.h. die Temperierungskanäle erstrecken sich auf oder in einem materialführenden Rohr über mehrere Seitenflächen des jeweiligen Rohres, namentlich der Randrohre 109, die am Ende eines jeden Düsenriegels 100 ausgebildet sind. Dadurch sind die Temperierungskanäle nicht nur auf einer Längsseite des Düsenriegels ausgebildet, sondern über Eck auch auf den Querseiten.

Um eine Herstellung des Temperierungskanals 105 zu ermöglichen, sind ein aufsteigender Ast und ein absteigender Ast des Temperierungskanals 105 im Bereich 113 zumindest abschnittsweise zueinander geneigt, so dass Raum für einen Übergang von einer langen Seite des Düsenriegels 100 auf die kurze Seite des Düsenriegels entsteht.

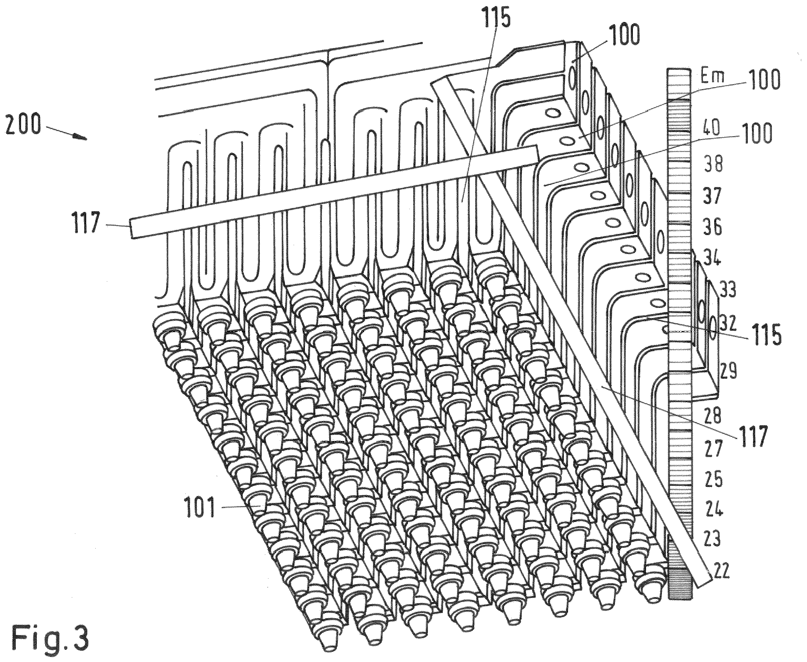

In Fig. 3 ist eine Düsenanordnung 300 dargestellt, welche eine Vielzahl an Düsenriegeln 100 gemäß Fig. 1 umfasst, wobei in dem vorliegenden Ausführungsbeispiel insgesamt sechs Düsenriegel 100 nebeneinander angeordnet sind, so dass mit der Düsenanordnung 300 eine Mikrotiterplatte mit insgesamt 96 Kavitäten in nur einem Spritzgusszyklus (one-shot) hergestellt werden kann.

Man erkennt, dass jeder Düsenriegel 100 zwei Reihen mit jeweils acht materialführenden Rohren 101 umfasst, die durch Ausnehmungen 115 voneinander beabstandet sind, wobei die Ausnehmungen 115 in Längs- und Querrichtung zwischen den materialführenden Rohren 101 verlaufen. Die Ausnehmungen 115 sind zudem zwischen jeweils benachbarten Düsenriegeln 100 ausgebildet, welche innerhalb der Düsenanordnung 300 fest miteinander verbunden und thermisch gekoppelt sind.

Die Verbindung zwischen den Düsenriegeln erfolgt jeweils über (nicht gezeigte) Schnittstellen, die bevorzugt an oder in den jeweiligen Randrohren 109 ausgebildet sind. Dadurch können sowohl die Düsenriegel 100 als solche als auch die in den Temperierungskanälen 105 ausgebildeten Temperierungselemente miteinander verbunden werden.

Die Schnittstellen zur thermischen Kopplung mit einem weiteren Düsenriegel ermöglichen damit eine Parallelisierung mehrerer Düsenriegel zu einer Düsenanordnung mit vorliegend 96 materialführenden Rohren 101, die mithin raster- oder matrixförmig angeordnet sind und insgesamt 96 Anspritzpunkte für die Herstellung einer Mikrotiterplatte mit 96 Kavitäten (96 well plate) bilden.

In den Ausnehmungen 115 zwischen den materialführenden Rohren 101 sind weitere (nur schematisch angedeutete) platten- oder streifenförmige Temperierungselemente 117 angeordnet, die jeweils mit elektrischen Heizelementen versehen sind. Die Heizelemente können von Widerstandsdrähten gebildet werden oder in Dickschichttechnik ausgeführt sein. Die weiteres Temperierungselemente 117 umfassen damit optionale Dickschichtheizungen, die bevorzugt in den elektrischen Heizkreis der Temperierelemente in den Temperierungskanälen der Rohre 101 integriert sind. Die zusätzlichen Heizelemente auf den weiteren Temperierungselementen 117 können auch einem separaten Heizkreis zugeordnet sein und bei Bedarf über eigene Temperaturfühler verfügen.

Das erfindungsgemäße Spritzgussverfahren für die Herstellung einer Mikrotiterplatte mit 96 Kavitäten sieht vor, dass die Mikrotiterplatte mit einer erfindungsgemäßen Düsenanordnung 300 in einem one-shot Verfahren gegossen wird.

Durch die erfindungsgemäß Ausbildung der Düsenriegel 100, wonach mindestens ein Temperierungskanal in dem Düsenriegel 100 vorgesehen ist, dessen Verlauf sich zwischen jeweiligen Rohren 101 der Vielzahl der materialführenden Rohre unterscheidet, ergibt sich eine äußerst gleichmäßige und präzise Temperaturverteilung, was sich günstig auf die herzustellende Mikrotiterplatte auswirkt. Diese lassen sich rasch und rationell herstellen.

Die Erfindung ist nicht auf eine der vorbeschriebenen Ausführungsformen beschränkt, sondern in vielfältiger Weise abwandelbar. So kann die Anzahl der Düsenriegel 100 in einer Düsenanordnung 300 variieren, je nach Anzahl der benötigten Anspritzpunkte für die herzustellende Mikrotiterplatten. Neben Mikrotiterplatten lassen sich auch andere Produkte herstellen, die eine Vielzahl raster- oder matrixförmiger Anspritzpunkte erfordern.

In die Temperierungskanäle 105 können elektrische Heizelemente oder Rohre, die Temperiermedien führen, eingebracht werden. Die elektrischen Heizelemente können in Dickschichttechnik ausgebildet sein, so dass die Kanäle 105 relativ flach gehalten werden können. Bei Bedarf können die Dickschichtheizer auch auf die Seitenflächen der materialführenden Rohre aufgebracht sein.

Die in den Ausnehmungen 115 eingebrachten weiteren Temperierungselemente 117 sind vorzugsweise platten- oder streifenförmig ausgebildet und liegen innerhalb der Ausnehmungen 115 parallel zueinander. Die weiteren Temperierungselemente 117 können aber auch bei Bedarf rechtwinklig zueinander und/oder verschachtelt angeordnet sein.

Jeder Düsenriegel 100 verfügt vorzugsweise über Verschlussnadeln 120, die Angussöffnungen in (nicht näher bezeichneten) Düsenmundstücken in den materialführenden Rohren 101 oder in der Werkzeugplatte öffnen und verschließen. Jeder Düsenriegel 100 kann mit seinen materialführenden Rohen 101 auch als offene Düsenanordnung ausgebildet sein.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- 100: Düsenriegel
- 101: Rohr
- 103: Kopfbereich
- 105: Temperierungskanal
- 107: Messfühler
- 109: Randrohr
- 111: Mittelrohr
- 113: Bereich
- 115: Ausnehmung
- 117: weiteres Temperierungselement
- 120: Düsennadel
- 300: Düsenanordnung

## Patentansprüche

1. Düsenriegel (100) für ein Heißkanalsystem zum Verarbeiten einer fließfähigen Masse, wobei der Düsenriegel (100) umfasst:
a) eine Vielzahl materialführende Rohre (101) zum Leiten der fließfähigen Masse durch den Düsenriegel (100),
b) einen Kopfbereich (103), in dem Verteilerkanäle zum Verteilen der fließfähigen Masse auf jeweilige Rohre (101) der Vielzahl Rohre (101) ausgebildet sind,
c) wobei in dem Düsenriegel (100) eine Anzahl Temperierungskanäle (105) zum Aufnehmen eines Temperierungselements zum Temperieren des Düsenriegels (100) ausgebildet ist,
d) wobei ein Verlauf der Anzahl Temperierungskanäle (105) sich zwischen jeweiligen Rohren (101) der Rohre (101) unterscheidet.

2. Düsenriegel (100) nach Anspruch 1, **dadurch gekennzeichnet, dass** ein Verlauf von in gegenüberliegenden Seiten des Düsenriegels (100) angeordneten Randrohren (109) ausgebildeten Randtemperierungskanälen sich von einem Verlauf von in zwischen den Randrohren (109) ausgebildeten Mitteltemperierungskanälen (111) unterscheidet.

3. Düsenriegel (100) nach Anspruch 2, **dadurch gekennzeichnet, dass** die Randtemperierungskanäle (109) länger sind als die Mitteltemperierungskanäle (111) oder die Mitteltemperierungskanäle (111) länger sind als die Randtemperierungskanäle (109).

4. Düsenriegel (100) nach Anspruch 2 oder 3, **dadurch gekennzeichnet, dass** ein jeweiliger in einem materialführenden Rohr (101) ausgebildeter Temperierungskanal (105) einen aufsteigenden Ast und einen absteigenden Ast umfasst, und jeweilige Mitteltemperierungskanäle (111) und/oder Randtemperierungskanäle (109) derart ausgestaltet sind, dass deren jeweiliger aufsteigender Ast und/oder deren absteigender Ast zueinander geneigt verlaufen.

5. Düsenriegel (100) nach einem der Ansprüche 2 bis 4, **dadurch gekennzeichnet, dass** an jeweiligen Randrohren (109) mehrere Temperierungskanäle (105) und an jeweiligen Mittelrohren (111) lediglich ein Temperierungskanal (105) ausgebildet ist.

6. Düsenriegel (100) nach einem der Ansprüche 2 bis 5, **dadurch gekennzeichnet, dass** zumindest ein Teil der Temperierungskanäle (105, 111) sich in den Kopfbereich (103) des Düsenriegels (100) hinein erstreckt.

7. Düsenriegel (100) nach Anspruch 6, **dadurch gekennzeichnet, dass** lediglich jeweilige um einen zentralen Mitteltemperierungskanal (111) des Düsenriegels (100) herum angeordnete Mitteltemperierungskanäle (111) sich in den Kopfbereich (103) des Düsenriegels (100) erstrecken.

8. Düsenriegel (100) nach Anspruch einem der voranstehenden Ansprüche, **dadurch gekennzeichnet, dass** der Düsenriegel (100) mehrere materialführende Rohre (101) umfasst, die durch Ausnehmungen (115) voneinander beabstandet sind, wobei die Ausnehmungen (115) in Längs- und/oder Querrichtung zwischen den materialführenden Rohren (101) verlaufen und wobei in zumindest einem Teil der zwischen den Rohren (101) verlaufenden Ausnehmungen (115) ein weiteres Temperierungselement (117) angeordnet ist.

9. Düsenriegel (100) nach Anspruch 8, **dadurch gekennzeichnet, dass** das weitere Temperierungselement (117) eine Dickschichtheizung umfasst oder aufweist.

10. Düsenriegel (100) nach einem der voranstehenden Ansprüche, **dadurch gekennzeichnet, dass** der Düsenriegel (100) eine Anzahl Düsennadeln (120) zum Steuern eines Volumenstroms der fließfähigen Masse durch den Düsenriegel (100) umfasst.

11. Düsenanordnung (300) für ein Heißkanalsystem zum Verarbeiten einer fließfähigen Masse, wobei die Düsenanordnung (300) eine Vielzahl Düsenriegel (100) nach einem der Ansprüche 1 bis 10 umfasst.

12. Düsenanordnung (300) nach Anspruch 11, **dadurch gekennzeichnet, dass** die Düsenanordnung (300) 6 Düsenriegel (100) umfasst, die jeweils 8 Rohrpaare (101) umfassen.

13. Düsenanordnung (300) nach Anspruch 11 oder 12, **dadurch gekennzeichnet, dass** zwischen jeweiligen Düsenriegeln (100) Zwischenelemente angeordnet sind, die dazu konfiguriert sind, thermische Energie in angrenzende Düsenriegel (100) einzuleiten oder thermische Energie aus angrenzenden Düsenriegeln (100) abzuführen.

14. Spritzgussverfahren zum Herstellen eines Produkts, wobei das Spritzgussverfahren umfasst:
▪ Spritzgießen des Produkts mittels einer Düsenanordnung (300) nach einem der Ansprüche 11 bis 13 wobei das Produkt in einem one-shot Verfahren gegossen wird.

15. Spritzgussverfahren nach Anspruch 14, **dadurch gekennzeichnet, dass** das Produkt eine Mikrotiterplatte oder Kavitätenplatte ist (englisch: well plate oder microwell plate) mit insbesondere 96 Kavitäten (englisch: wells).
